# EUROPÄISCHE PATENTANMELDUNG

(11) **EP 2 500 201 A1**
(43) Veröffentlichungstag der Anmeldung: **19.09.2012**
(21) Anmeldenummer: 12153425.9
(22) Anmeldetag: 01.02.2012
(51) Int. Cl.: B60K 7/00

(54) **Antriebsvorrichtung zum Antreiben eines Rades für ein elektrisch antreibbares Fahrzeug**

(30) Priorität: 16.03.2011 DE 102011005620
(71) Anmelder: ZF Friedrichshafen AG, 88038 Friedrichshafen (DE)
(72) Erfinder: Heimann, Jens, 88719 Stetten (DE); Münster, Martin, 82140 Olching (DE); Pollmeyer, Stephan, 88046 Friedrichshafen (DE); Mair, Ulrich, 88046 Friedrichshafen (DE)

(57) **Zusammenfassung**

Es wird eine Antriebsvorrichtung (11) zum Antreiben eines Rades (7) einer Achse für ein elektrisch antreibbares Fahrzeug vorgeschlagen, umfassend eine elektrische Maschine (12) und ein in Kraftflussrichtung im Zugbetrieb betrachtet abtriebsseitig der elektrischen Maschine (12) geschaltetes einstufiges oder mehrstufiges Planetengetriebe (13), wobei die elektrische Maschine (12) als Innenläufer mit einem als Hohlwelle ausgeführten Rotor (14) oder als Außenläufer mit einem als Hohlwelle ausgeführten Stator (15) ausgeführt ist, wobei das Planetengetriebe (13) im Hohlraum des Rotors (14) bzw. des Stators (15) innerhalb der elektrischen Maschine (12) angeordnet ist und wobei das Planetengetriebe (13) axial betrachtet an der dem Rad (7) abgewandten Seite der Radnabe (21) angeordnet ist.

## Beschreibung

Die vorliegende Erfindung bezieht sich auf eine Antriebsvorrichtung zum Antreiben eines Rades für ein elektrisch antreibbares Fahrzeug gemäß dem Oberbegriff des Patentanspruchs 1.

In der Regel entspricht die Anordnung des Antriebsstrangs bei elektrisch angetriebenen Fahrzeugen der Anordnung des Antriebsstrangs bei Fahrzeugen, welche einen Zentralantrieb, umfassend einen Verbrennungsmotor, aufweisen. Hierbei wird eine Antriebsvorrichtung, umfassend eine elektrische Maschine, ein Getriebe und ein Differenzial karosseriefest in der Fahrzeugmitte zwischen den Vorder- oder Hinterrädern angeordnet; das Abtriebsmoment wird wie bei konventionellen Zentralantrieben über Seitenwellen auf die angetriebenen Räder übertragen. Bei einer derartigen Anordnung des Antriebsstrangs bleibt das Fahrwerkkonzept weitestgehend erhalten, wobei lediglich Modifikationen der Aggregatelagerung und des Hilfsrahmens erforderlich sind.

Bei elektrisch angetriebenen oder antreibbaren Fahrzeugen, umfassend einen Zentralantrieb, stellt die Batterieunterbringung einen erheblichen Eingriff in die Fahrzeugstruktur dar. Hierbei ist bekannt, die Batterie in den Unterboden, beispielsweise unter der Rücksitzbank oder im Bereich, der bei Zentralantrieben mit einem Verbrennungsmotor vom Getriebetunnel eingenommen wurde, zu integrieren.

Auch sind im Stand der Technik radnahe elektrische Antriebe bekannt, wobei unter radnahen elektrischen Antrieben im Weiteren Antriebe verstanden werden, welche pro Antriebsrad des Fahrzeugs ein oder mehrere Elektromotoren vorsehen. So sind Fahrzeuge mit zwei oder mehreren Antriebsrädern bekannt, die eine entsprechende Anzahl an Antrieben, also zwei oder mehrere aufweisen. Dabei kann jeweils ein Elektromotor auf genau ein Antriebsrad wirken.

Unter radnahen Antrieben können aber auch Antriebe verstanden werden, die einen lenkerfesten oder einen radfesten Antrieb aufweisen.

Des Weiteren sind aus dem Stand der Technik radnahe elektrische Antriebe für elektrisch angetriebene Fahrzeuge bekannt, die in das Fahrwerk des Fahrzeugs integriert sind, wobei in Abhängigkeit von der Anzahl der angetriebenen Fahrzeugachsen beispielsweise zwei oder vier elektrische Antriebe vorgesehen sind.

Hierbei können die elektrischen Antriebe radträgerfest angeordnet sein; in diesem Fall federt der elektrische Antrieb unmittelbar mit dem jeweiligen Rad mit und die ungefederte Masse wird durch den Antrieb direkt beeinflusst.

Eine weitere Möglichkeit der Anordnung der radnahen elektrischen Antriebe besteht darin, diese aufbaufest anzuordnen. Hierbei rücken die elektrischen Antriebe aus der Fahrzeugmitte heraus hin zu den Rädern.

Ferner können die elektrischen Antriebe lenkerfest angeordnet sein, wobei sie in diesem Fall an den Fahrwerkslenkern, beispielsweise am Verbundlenker befestigt sind. Durch diese Konzeption wird die ungefederte Masse reduziert, indem die elektrischen Antriebe nahe am aufbaufesten Lenkeranbindungspunkt angeordnet werden.

Aus der DE 10 2007 039 059 A1 der Anmelderin ist eine als Verbundlenkerachse ausgeführte angetriebene Fahrzeugachse bekannt, bei der für jedes Rad der Achse ein Elektromotor vorgesehen ist, welcher mit der Drehachse in Fahrzeuglängsrichtung angeordnet ist, wobei dessen Gehäuse einen Teil der Längsschwinge der Verbundlenkerachse darstellt.

Radnahe Antriebe können bei Fahrzeugen mit Allrad-, Front-, oder Heckantrieb vorgesehen sein, wobei die Achstypen der angetriebenen Fahrzeugachsen konventionelle Achstypen, wie z.B. Federbein- oder Doppelquerlenkerachstypen sein können. Ferner können radnahe Antriebe in radintegrierte Fahrwerke integriert sein.

Des Weiteren können die radnahen elektrischen Antriebe ein Getriebe aufweisen.

Aus der EP 1 979 186 B1 ist eine Raddrehvorrichtung für ein Radnabenmotorfahrzeug bekannt, umfassend einen Motor mit einem Stator und einem Rotor, einen Drehzahluntersetzer, der mit einem Ausgangsteil des Motors gekoppelt ist, eine Nabe, die mit einem Ausgangsteil des Drehzahluntersetzers gekoppelt ist und eine Achse, die relativ zu einem Fahrzeugaufbau fixierbar ist und die Nabe in einer Weise trägt, die eine Drehung der Nabe gestattet. Hierbei ist der Stator des Motors einwärts in radialen Richtungen des Rades entlang einer Innenumfangsfläche des Rads angeordnet, wobei der Rotor des Motors einwärts in radialen Richtungen des Stators angeordnet ist.

Bei der bekannten Raddrehvorrichtung ist vorgesehen, dass der Drehzahluntersetzer radial betrachtet zwischen dem Rotor und der Nabe mit zwischen dem Drehzahluntersetzer und der Nabe vorgesehenen Lagern angeordnet ist.

In vorteilhafter Weise resultiert die Verwendung von radnahen elektrischen Antrieben zum Antreiben eines Rades einer Achse für ein elektrisch antreibbares Fahrzeug in einer hohen Flexibilität, da sich durch den Entfall des zentralen Antriebs in der Fahrzeugmitte neue Freiheitsgrade bei der Fahrzeuggestaltung, insbesondere bei der Gestaltung des Fahrzeuginnenraums, der Batterieunterbringung und der Crash-Sicherheit ergeben.

Zudem können durch derartige radnahe elektrische Antriebe radindividuelle Antriebsmomente erzeugt werden, wodurch Funktionen wie Torque-Vectoring, ESP, ABS, ASR etc. auf einfache Weise realisiert werden können. Durch die schnelle und genauere Regelbarkeit von elektrischen Antrieben können diese Funktionen im Vergleich zu herkömmlichen bremsenbasierten Regelsystemen optimiert werden.

Der vorliegenden Erfindung liegt die Aufgabe zugrunde, eine Antriebsvorrichtung zum Antreiben eines Rades einer Achse für ein elektrisch antreibbares Fahrzeug anzugeben.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird eine Antriebsvorrichtung zum Antreiben eines Rades einer Achse für ein elektrisch antreibbares Fahrzeug vorgeschlagen, umfassend eine elektrische Maschine und ein in Kraftflussrichtung im Zugbetrieb betrachtet abtriebsseitig der elektrischen Maschine geschaltetes Planetengetriebe. Das Planetengetriebe ist axial betrachtet an der dem Rad abgewandten Seite der Radnabe angeordnet und kann einstufig oder mehrstufig ausgeführt sein. Auch oder zusätzlich können die Radlager, die das Rad drehbar mit dem Fahrwerk beziehungsweise der Karosserie verbinden, axial verschoben zum Planetengetriebe angeordnet sein. So kann insbesondere ein Lager axial hinter dem Planetengetriebe und ein Lager vor dem Planetengetriebe angeordnet sein. Durch diese Anordnung kann das Planetengetriebe zusammen mit der elektrischen Maschine in radialer Richtung kleiner gebaut sein, da erkannt wurde, dass die Radlager auch außerhalb der Antriebsvorrichtung platziert werden können. Durch die kleineren Ausmaße in radialer Richtung kann die Antriebsvorrichtung auch innerhalb von Felgen mit geringerem Durchmesser platziert werden. Durch die Verwendung von Rädern mit kleineren Felgendurchmessern kann weiterhin Gewicht gespart werden, was insbesondere bei der elektrisch betriebenen Fahrzeugen eine große Rolle spielt.

Durch die geringen radialen Ausmaße können die Antriebsvorrichtungen auch in Rädern mit kleinerem Umfang angeordnet werden. In vielen Fällen sind schon auch aus Gewichtsgründen gerade bei elektrisch angetriebenen Fahrzeugen kleinere Räder zu bevorzugen.

Hierbei ist vorgesehen, dass die elektrische Maschine als Hohlwellenmotor ausgeführt ist, d.h. als Innenläufer ausgeführte elektrische Maschine, die einen als Hohlwelle ausgeführten Rotor aufweist, wobei in diesem Fall das Planetengetriebe im Hohlraum des Rotors innerhalb der elektrischen Maschine angeordnet ist.

Die elektrische Maschine kann auch als Außenläufer ausgeführt sein, wobei sich der Stator im Inneren befindet und vom Rotor umschlossen ist. In diesem Fall ist der Stator als Hohlwelle ausgeführt, wobei das Planetengetriebe im Hohlraum des Stators innerhalb der elektrischen Maschine angeordnet ist.

Vorzugsweise ist der Rotor der elektrischen Maschine mit dem Sonnenrad des Planetengetriebes drehfest verbunden, wobei das Hohlrad des Planetengetriebes gehäusefest angeordnet bzw. an das Gehäuse gekoppelt ist; der Abtrieb erfolgt über den Steg des Planetengetriebes, welcher über eine Welle mit der Radnabe verbunden ist.

Im Rahmen einer Weiterbildung der Erfindung kann die Antriebsvorrichtung in das Rad bzw. in die Radfelge integriert sein.

Um die Abmessungen und die Masse der elektrischen Maschine gering zu halten, ist im Rahmen einer Ausführungsform der Erfindung das Planetengetriebe derart konzipiert, dass eine hohe Übersetzung, beispielsweise eine Übersetzung zwischen 1 und 30 ermöglicht wird, wobei die elektrische Maschine hochdrehend ausgeführt ist.

In vorteilhafter Weise ergibt die Kombination eines niedrigen Antriebsmomentes mit einer hohen Drehzahlausnutzung in Summe in Verbindung mit dem hoch übersetzenden Planetengetriebe der Antriebsvorrichtung ein hohes Leistungs-/Gewichtsverhältnis (kW/kg), was eine kleine Dimensionierung und für den Fall einer Verbundlenkerachse die Integration der elektrischen Maschine in den Längslenker ermöglicht.

Im Rahmen einer weiteren Ausführungsform der Erfindung weist die elektrische Maschine einen großen Durchmesser auf, der im Wesentlichen dem Innendurchmesser des Rades entspricht, wodurch eine Integration der Antriebsvorrichtung in das Rad bzw. in die Radfelge ermöglicht wird, so dass von der elektrischen Maschine ein hohes Drehmoment erzeugt werden kann; in diesem Fall liegt die mit dem Planetengetriebe erzielbare Übersetzung vorzugweise in einem Bereich zwischen 1 und 10.

Die Antriebsvorrichtung kann insbesondere mit einer Verbundlenker, Zentrallenker-, Schräglenker- oder Längslenkerachse kombiniert werden. Dabei wird unter einer Verbundlenkerachse unter Anderem eine Achse mit zwei Längslenkern und einem diese verbindenden Querträger verstanden. Unter einer Zentrallenkerachse wird eine Achse mit zwei Längslenkern verstanden, wobei jeder Längslenker mit zwei Querlenkern verbunden ist, die an der Karosserie befestigt sind. Eine Schräglenkerachse umfasst pro Rad eine in etwa dreieckige Schwinge, welche an den zwei Enden mit der Karosserie und am Scheitel mit dem Radträger verbunden ist. Eine Längslenkerachse ist eine Achse, welche pro Rad einen Längslenker vorsieht, der einerseits mit der Karosserie und andererseits mit dem Rad verbunden ist.

Die Erfindung wird im Folgenden anhand der beigefügten Figuren für den Fall einer Verbundlenker-Hinterachse beispielhaft näher erläutert, wobei für gleiche Bauteile dieselben Bezugszeichen verwendet werden. Es zeigen:
- Figur 1:: Eine schematische Draufsicht einer nach dem Stand der Technik ausgeführten Verbundlenker-Hinterachse; und
- Figur 2:: Eine schematische Schnittansicht einer Ausführungsform einer erfindungsgemäßen Antriebsvorrichtung zum Antreiben eines Rades einer Achse für ein elektrisch antreibbares Fahrzeug.

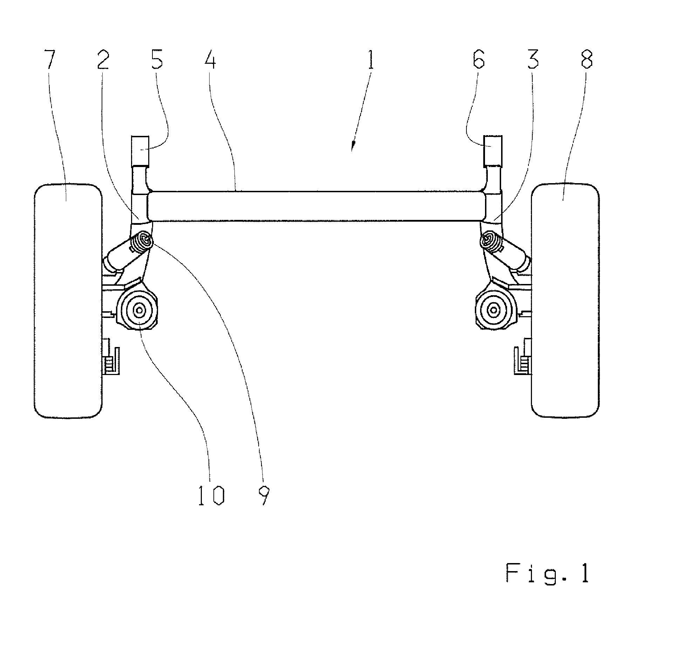

Die Erfindung wird anhand einer Verbundlenker-Hinterachse erläutert, da dies das meist verbreitete Hinterachskonzept darstellt. Bezugnehmend auf Figur 1 umfasst eine nach dem Stand der Technik ausgeführte Verbundlenker-Hinterachse 1 zwei Längslenker 2, 3, welche durch ein Querprofil 4 miteinander verbunden sind.

Die Verbundlenker-Hinterachse 1 ist durch zwei Gummilager 5, 6 mit der Karosserie des Fahrzeugs verschraubt. Die Räder der Verbundlenker-Hinterachse 1 sind in der Figur mit den Bezugszeichen 7 bzw. 8 versehen. Ferner sind in der beigefügten Figur 1 mit 9 ein Dämpfer und mit 10 eine Feder der Achse 1 bezeichnet.

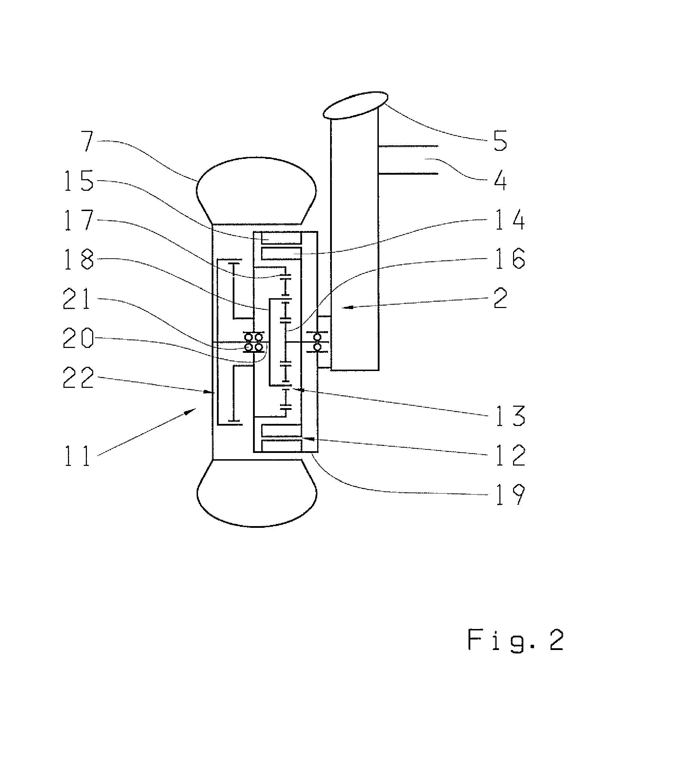

Bei der in Figur 2 gezeigten Ausführungsform der Erfindung ist eine Antriebsvorrichtung 11 zum Antreiben eines Rades 7 einer Achse für ein elektrisch antreibbares Fahrzeug vorgesehen, welche eine elektrische Maschine 12 und ein in Kraftflussrichtung im Zugbetrieb betrachtet abtriebsseitig der elektrischen Maschine 12 geschaltetes Planetengetriebe 13 umfasst.

Bei dem gezeigten Beispiel ist die elektrische Maschine 12 als Innenläufer und Hohlwellenmotor ausgeführt, wobei das einstufige Minus-Planetengetriebe 13 im Hohlraum des Rotors 14 innerhalb der elektrischen Maschine 12 angeordnet ist. Der Stator der elektrischen Maschine 12 ist in Figur 2 mit dem Bezugszeichen 15 versehen.

Der Abtrieb des Planetengetriebes 13 ist koaxial zum Rotor 14 und zum Stator 15 der elektrischen Maschine 12 angeordnet. Wie aus Figur 2 ersichtlich, ist das Planetengetriebe 13 axial betrachtet an der dem Rad 7 abgewandten Seite der Radnabe 21 angeordnet. Dies resultiert in dem Vorteil, dass das die Antriebsvorrichtung 11 unabhängig von der Radnabe vormontiert sein kann und eine Einheit bildet, wobei sich der Wartungsaufwand und der Einbau von Ersatzteilen im Vergleich zum Stand der Technik vereinfachen. Auch sind kleinere radiale Abmessungen der Antriebsvorrichtung möglich, wodurch der Bauraumbedarf der Antriebsvorrichtung verringert wird.

Wie aus Figur 2 ersichtlich, ist der Rotor 14 der elektrischen Maschine 12 mit dem Sonnenrad 16 des Planetengetriebes 13 drehfest verbunden, wobei das Hohlrad 17 des Planetengetriebes 13 an das Gehäuse 19 der elektrischen Maschine gekoppelt ist. Ferner erfolgt der Abtrieb der Antriebsvorrichtung 11 über den Steg 18 des Planetengetriebes 13, welcher über eine Welle 20 mit der Radnabe 21 verbunden ist. Bei dem gezeigten Beispiel ist eine Trommelbremse vorgesehen, welche in Figur 2 mit dem Bezugszeichen 22 versehen ist.

Für den Fall, dass die elektrische Maschine 12 als Außenläufer mit einem als Hohlwelle ausgeführten Stator 15 ausgeführt ist, ist das Planetengetriebe 13 im Hohlraum des Stators 15 innerhalb der elektrischen Maschine 12 angeordnet. Bezugnehmend auf Figur 2 wird die radiale Anordnung von Stator 15 und Rotor 14 vertauscht.

Im Rahmen weiterer, nicht dargestellter Ausführungsformen können der Antrieb und/oder der Abtrieb des Planetengetriebes 13 über ein weiteres Element des Planetengetriebes erfolgen.

Bei dem in Figur 2 gezeigten Beispiel ist die Antriebsvorrichtung 11 in das Rad 7 integriert, wobei die elektrische Maschine 12 einen großen Durchmesser aufweist, der im Wesentlichen dem Innendurchmesser des Rades 7 entspricht, so dass ein hohes Drehmoment erzeugt werden kann.

Die elektrische Maschine 12 der Antriebsvorrichtung kann als Asynchronmaschine oder als permanentmagnet-erregte Synchronmaschine ausgeführt werden, was eine hohe Flexibilität bietet.

Das Gehäuse 19 der elektrischen Maschine 12 der Antriebsvorrichtung 11 kann auch als Radträger oder als Teil des Radträgers dienen und somit auftretende Kräfte ins Fahrwerk des Fahrzeugs einleiten.

Für den Fall, dass die Bremse als Trommelbremse ausgeführt ist, kann in vorteilhafter Weise die Ankerplatte der Bremstrommel in das Gehäuse 19 der elektrischen Maschine 12 integriert sein.

Im Rahmen einer Weiterbildung der Erfindung sind die Anbindung des Bremssattels - für den Fall, dass die Bremse als Scheibenbremse ausgeführt ist - und/oder des Dämpfers 9 in das Gehäuse 19 der elektrischen Maschine integriert, wobei die Verbindungsschrauben zur Fixierung des Bremssattels gleichzeitig Gehäuseschrauben für die Befestigung der Antriebsvorrichtung 11 am Längsträger 2 der Achse darstellen können.

Auf diese Weise wird eine kompakte Bauweise erzielt und es entfällt die Notwendigkeit separater Bauteile, was in einer Reduzierung der Kosten resultiert.

Zudem kann das Gehäuse 19 der elektrischen Maschine 12 direkt mit dem Längslenker 2 der Fahrzeugachse, die als Verbundlenkerachse ausgeführt sein kann, verschraubt werden. Alternativ kann das Gehäuse 19 der elektrischen Maschine 12 beispielsweise als mehrteiliges Schweißbauteil in den Längslenker 2 integriert werden.

Durch die erfindungsgemäße Konzeption kann bei einer geringen ungefederten Masse und hohem Leistungs-/Gewichtsverhältnis (kW/kg) eine sehr kompakte Bauweise der radnahen Antriebsvorrichtung realisiert werden.

Die hier vorgestellte Antriebsvorrichtung kann mit beliebigen Achstypen, beispielsweise mit einer Zentrallenker-, Schwertlenker-, oder Trapezlenkerachse kombiniert werden.

Des Weiteren weist die Antriebsvorrichtung eine geringe Lageranzahl und eine gute Zugänglichkeit auf, wobei sie mit geringer Modifikation einer bestehenden Fahrzeugachse in die Achse integriert werden kann. Beispielsweise muss für den Fall einer Verbundlenkerachse lediglich der Längsträger durch ein modifiziertes Teil ersetzt werden.

Die Antriebsvorrichtung 11 kann luftgekühlt oder fluidgekühlt ausgeführt sein, wobei die elektrische Maschine, das Planetengetriebe und die Leistungselektronik eine gemeinsame Kühlung aufweisen können. Die Leistungselektronik kann zudem radträgerfest oder motorfest angeordnet sein.

Bezugszeichen
- 1: Verbundlenker-Hinterachse
- 2: Längslenker
- 3: Längslenker
- 4: Querprofil
- 5: Gummilager
- 6: Gummilager
- 7: Rad
- 8: Rad
- 9: Dämpfer
- 10: Feder
- 11: Antriebsvorrichtung
- 12: elektrische Maschine
- 13: Planetengetriebe
- 14: Rotor der elektrischen Maschine 12
- 15: Stator der elektrischen Maschine 12
- 16: Sonnenrad des Planetengetriebes 13
- 17: Hohlrad des Planetengetriebes 13
- 18: Steg des Planetengetriebes 13
- 19: Gehäuse der elektrischen Maschine
- 20: Welle
- 21: Radnabe
- 22: Trommelbremse

## Patentansprüche

1. Antriebsvorrichtung (11) zum Antreiben eines Rades (7) einer Achse für ein elektrisch antreibbares Fahrzeug, umfassend eine elektrische Maschine (12), **dadurch gekennzeichnet, dass** sie ein in Kraftflussrichtung im Zugbetrieb betrachtet abtriebsseitig der elektrischen Maschine (12) geschaltetes einstufiges oder mehrstufiges Planetengetriebe (13) umfasst, wobei die elektrische Maschine (12) als Innenläufer mit einem als Hohlwelle ausgeführten Rotor (14) oder als Außenläufer mit einem als Hohlwelle ausgeführten Stator (15) ausgeführt ist und wobei das Planetengetriebe (13) im Hohlraum des Rotors (14) bzw. des Stators (15) innerhalb der elektrischen Maschine (12) angeordnet ist und dass das Planetengetriebe (13) axial betrachtet an der dem Rad (7) abgewandten Seite der Radnabe (21) angeordnet ist.

2. Antriebsvorrichtung (11) zum Antreiben eines Rades (7) einer Achse für ein elektrisch antreibbares Fahrzeug, nach Anspruch 1, **dadurch gekennzeichnet, dass** für den Fall eines einstufigen Planetengetriebes (13) der Rotor (14) der elektrischen Maschine (12) mit dem Sonnenrad (16) des Planetengetriebes (13) drehfest verbunden ist, wobei das Hohlrad (17) des Planetengetriebes (13) an das Gehäuse (19) der elektrischen Maschine gekoppelt ist und wobei der Abtrieb der Antriebsvorrichtung (11) über den Steg (18) des Planetengetriebes (13) erfolgt, welcher über eine Welle (20) mit der Radnabe (21) verbunden ist.

3. Antriebsvorrichtung (11) zum Antreiben eines Rades (7) einer Achse für ein elektrisch antreibbares Fahrzeug, nach Anspruch 2, **dadurch gekennzeichnet, dass** sie in das Rad (7) bzw. in die Radfelge integriert ist.

4. Antriebsvorrichtung (11) zum Antreiben eines Rades (7) einer Achse für ein elektrisch antreibbares Fahrzeug, nach Anspruch 3, **dadurch gekennzeichnet, dass** die elektrische Maschine (12) einen Durchmesser aufweist, der im Wesentlichen dem Innendurchmesser des Rades (7) entspricht, wodurch eine Integration der Antriebsvorrichtung (11) in das Rad (7) bzw. in die Radfelge ermöglicht wird und ein hohes Drehmoment erzeugt werden kann.

5. Antriebsvorrichtung (11) zum Antreiben eines Rades (7) einer Achse für ein elektrisch antreibbares Fahrzeug, nach einem der vorangehenden Ansprüche, **dadurch gekennzeichnet, dass** die Anbindung des Bremssattels, für den Fall, dass eine Scheibenbremse (22) vorgesehen ist und/oder des Dämpfers (9) in das Gehäuse (19) der elektrischen Maschine (12) der Antriebsvorrichtung (11) integriert sind.

6. Antriebsvorrichtung (11) zum Antreiben eines Rades (7) einer Achse für ein elektrisch antreibbares Fahrzeug, nach einem der vorangehenden Ansprüche, **dadurch gekennzeichnet, dass** insbesondere bei einer Verbundlenkerachse (1) das Gehäuse (19) der elektrischen Maschine (12) direkt mit dem Längslenker (2) der Fahrzeugachse verschraubt ist, als mehrteiliges Schweißbauteil in den Längslenker (2) integriert ist oder in den Längslenker, der insbesondere als Gussteil ausgearbeitet sein kann, integriert ist.

7. Antriebsvorrichtung (11) zum Antreiben eines Rades (7) einer Achse für ein elektrisch antreibbares Fahrzeug, nach einem der vorangehenden Ansprüche, **dadurch gekennzeichnet, dass** das Gehäuse (19) der elektrischen Maschine (12) als Radträger oder als Teil des Radträgers dient.

8. Antriebsvorrichtung (11) zum Antreiben eines Rades (7) einer Achse für ein elektrisch antreibbares Fahrzeug, nach einem der vorangehenden Ansprüche, **dadurch gekennzeichnet, dass** für den Fall, dass die Bremse als Trommelbremse ausgeführt ist, die stehende Ankerplatte der Bremstrommel in das Gehäuse (19) der elektrischen Maschine (12) integriert ist.

9. Antriebsvorrichtung (11) zum Antreiben eines Rades (7) einer Achse für ein elektrisch antreibbares Fahrzeug, nach mindestens einem der vorhergehenden Ansprüche, **dadurch gekennzeichnet, dass** die elektrische Maschine hochdrehend ist, bevorzugt eine maximale Drehzahl größer als 5 000 Umdrehungen/min, insbesondere zwischen 6000 und 10000 Umdrehungen/min, besonders bevorzugt um 7000 Umdrehungen/min aufweist.

10. Antriebsvorrichtung (11) zum Antreiben eines Rades (7) einer Achse für ein elektrisch antreibbares Fahrzeug nach mindestens einem der vorhergehenden Ansprüche, **dadurch gekennzeichnet, dass** das Getriebe eine Übersetzung aufweist, wobei das Verhältnis zwischen der Umdrehungsgeschwindigkeit der Antriebswelle zur Abtriebswelle des Getriebes größer als 2, insbesondere um 4 ist.
